# EUROPEAN PATENT APPLICATION

(11) **EP 1 863 213 A1**
(43) Date of publication of application: **05.12.2007**
(21) Application number: 05721273.0
(22) Date of filing: 22.03.2005
(51) Int. Cl.: H04L 1/22, H04L 29/14

(54) **DUPLICATE TRANSMISSION PATH SWITCHING DEVICE**

(71) Applicant: Media Global Links Co., Ltd., Kawasaki-shi, Kanagawa 213-0012 (JP)
(72) Inventor: MATSUSHIMA, Hiroaki, Media Global Links Co., Ltd., Kawasaki-shi Kanagawa 2130012 (JP); HAYASHI, Eiichi, Media Global Links Co., Ltd., Kawasaki-shi Kanagawa 2130012 (JP); MORITA, Takaaki, Media Global Links Co., Ltd., Kawasaki-shi Kanagawa 2130012 (JP)
(74) Representative: Betten & Resch
(86) International application number: PCT/JP2005/005173
(87) International publication number: WO 2006/100761

(57) **Abstract**

In switching by failure, no switching is performed when a packet of IP packet is lost or a packet has not arrived even when a predetermined time has elapsed, which are not recognized as a failure. There is provided a duplicate transmission path switching device for flowing packets having the same information configuration to a main transmission path and an auxiliary transmission path. The device includes: a transmission failure monitoring unit for monitoring a transmission failure of the main transmission path; a switching acquisition unit arranged at the downstream of the transmission failure monitoring unit capable of acquiring a packet from the main transmission path during a normal mode, and switching to the auxiliary transmission path to acquire a packet from the auxiliary transmission path in a predetermined mode; and a switching command output unit used when the monitoring result shows that a transmission failure is present, for outputting a switching command capable of switching to the auxiliary transmission path before the transmission failure reaches the switching acquisition unit, to the switching acquisition unit.

## Description

### BACKGROUND OF THE INVENTION

### Field of the Invention

The present invention relates to a duplicate transmission path switching apparatus, which can carry out non-interruptive switching in duplicate transmission, and a method of operation thereof.

### Description of the Related Art

Conventionally, in the transmission path for communication (e.g., optical transmission path), if an error occurs in a transmission path currently being operated (hereinbelow, referred to as master transmission path), switching to a transmission path for backup of the master transmission path (hereinbelow, referred to as backup transmission path) and communication is carried out, so that continuity of communication is ensured. For example, in Jpn. patent No. 2874112, non-interruptive switching apparatus and method, in which the reduced requirement time from occurrence of the interruption to completion of the switching, is disclosed. Further, the method disclosed in Jpn. patent No. 2874112 is characterized in that an error such as bit error in data block is detected, and switching control signal is generated.

However, in the switching disclosed in Jpn. patent No. 2874112, the switching is not carried out in the case of an unrecognized error such as the case of an IP packet-drop or the case where the packet is not received within a predetermined period of time. The reason for this is that error such as the bit error is not defined in the respective packets.

### SUMMARY OF THE INVENTION

In order to solve the above deficiencies, the present invention is configured and arranged to include the following aspects.

The first aspect of the present invention is a duplicate transmission path switching apparatus, which transmits a packet including the same information to a master transmission path and a backup transmission path, comprising a monitoring unit for transmission error, which monitors transmission error of the master transmission path, a switching/receiving unit, which is provided downstream of the monitoring unit for transmission error, and in normal cases, receives the packet from the master transmission path, and in a predetermined case, carries out switching to the backup transmission path and receives the packet from the backup transmission path, and an output unit for switching command, which outputs a switching command enabling switching to the backup transmission path before the transmission error reaches the switching/receiving unit in cases where the result of the monitoring indicates the transmission error.

The second aspect of the present invention is the duplicate transmission path switching apparatus according to the first aspect, wherein the transmission error is a packet-drop.

The third aspect of the present invention is the duplicate transmission path switching apparatus according to the first aspect, wherein the transmission error includes packet-drops of more than a predetermined number.

The fourth aspect of the present invention is the duplicate transmission path switching apparatus according to any one of the first to third aspects, wherein the transmission error is a time-out, non-detection of the packet for a predetermined period of time.

The fifth aspect of the present invention is the duplicate transmission path switching apparatus according to any one of the first to fourth aspects, further comprising a first delay buffering unit, which is provided on the master transmission path between an acquisition point for monitoring signal of the monitoring unit for transmission error, which is provided on the master transmission path, and the switching/acquiring unit, and a second delay buffering unit, which is provided on the backup transmission path, upstream of the switching/acquiring unit.

The sixth aspect of the present invention is the duplicate transmission path switching apparatus according to any one of the first to fifth aspects, wherein the monitoring unit for transmission error comprises a monitoring means for backup transmission path, which monitors transmission error of backup transmission path, and an output means for error information of backup transmission path, which outputs error information of backup transmission path in cases where a result of the monitoring by the monitoring means for backup transmission path indicates the transmission error.

The seventh aspect of the present invention is the duplicate transmission path switching apparatus according to the fifth or sixth aspect, further comprising a comparing unit for delay, which is provided upstream of the first delay buffering unit and the second delay buffering unit, and compares delay of master transmission path with delay of backup transmission path.

The eighth aspect of the present invention is the duplicate transmission path switching apparatus according to any one of the fifth to seventh aspects, wherein the first delay buffering unit and the second delay buffering unit comprise an adjusting means for phase, which is for adjusting phase of a signal on the master transmission path and phase of a signal on the backup transmission path.

The ninth aspect of the present invention is the duplicate transmission path switching apparatus according to any one of the first to eighth aspects, wherein the master transmission path and the standby transmission path are optical transmission paths.

According to the duplicate transmission path switching apparatus of the present invention, it becomes possible to carry out non-interruption switching from the master transmission path to the backup transmission path in the case of transmission error such as abnormal signal level of received packet, a packet-drop, packet-drops of more than a predetermined number, or a time-out of receiving packet.

### BRIEF DESCRIPTION OF THE DRAWINGS

Fig. 1 is a functional block diagram of a first embodiment;
Fig. 2 is a flow chart of the first embodiment;
Fig. 3 is a functional block diagram of a first example of the first embodiment;
Fig. 4 is a functional block diagram of a second example of the first embodiment;
Fig. 5 is a functional block diagram of a third example of the first embodiment;
Fig. 6 is a functional block diagram of a second embodiment;
Fig. 7 is a flow chart of the second embodiment;
Fig. 8 is a concrete functional block diagram of a fourth example of the second embodiment;
Fig. 9 is a functional block diagram of a third embodiment;
Fig. 10 is a flow chart of the third embodiment;
Fig. 11 is a concrete functional block diagram of a fifth example of the third embodiment;
Fig. 12 is a functional block diagram of a fourth embodiment;
Fig. 13 is a flow chart of the fourth embodiment;
Fig. 14 is a functional block diagram of a sixth example of the fourth embodiment;
Fig. 15 is a functional block diagram of a fifth embodiment;
Fig. 16 is a flow chart of the fifth embodiment;
Fig. 17 is a functional block diagram of a seventh example of the fifth embodiment;
Fig. 18 is a functional block diagram of an eighth example of the fifth embodiment;
Fig. 19 is a diagram showing interleaving (case 1) of the eighth example of the fifth embodiment;
Fig. 20 is a diagram showing interleaving (case 2) of the eighth example of the fifth embodiment;
Fig. 21 is a diagram showing interleaving (case 3) of the eighth example of the fifth embodiment;
Fig. 22 is a diagram showing interleaving (case 4) of the eighth example of the fifth embodiment;

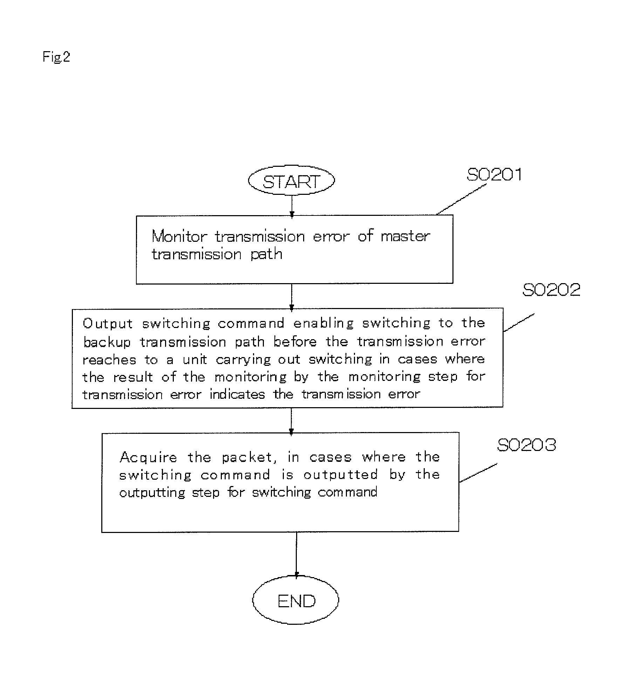

Fig. 2.3 is a diagram showing an entire system configuration of the eighth example of the fifth embodiment.

### DETAILED DESCRIPTION OF THE PREFERRED EMBODIMENTS

Embodiments of the present invention will be described hereinbelow with reference to the drawings. The present invention is not to be limited to the above embodiments and able to be embodied in various forms without departing from the scope thereof

### <<First embodiment>>

Hereinbelow, a first embodiment will be described.

### <Concept of First Embodiment>

Hereinbelow, a concept of the first embodiment will be described. According to the duplicate transmission path switching apparatus of the first embodiment, if a transmission error such as a packet-drop or packet time-out occurs, switching from the master transmission path to the backup transmission path is carried out, so that continuity of communication is ensured. Specifically, this is effective for data required to have continuity such as video data.

### <Specifying of Components>

Hereinbelow, the components of the first embodiment will be specified.

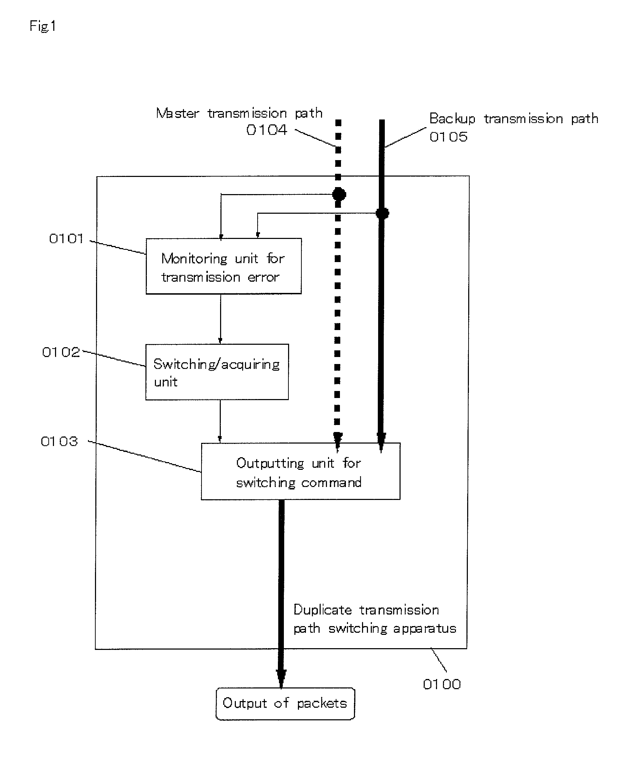

Fig. 1 is a functional block diagram exemplifying the duplicate transmission path switching apparatus the first embodiment. A duplicate transmission path switching apparatus 0100 comprises a monitoring unit for transmission error 0101, unit for switching command 0102, a switching/acquiring unit 0103, a master transmission path 0104, and a backup transmission path 0105. Note that, in Fig. 1, the arrow indicated by heavy perforated lines indicates flow of a packet with transmission error, and the arrow indicated by heavy solid lines indicates flow of a normal packet (the same is applied throughout the entire specification).

Note that this invention can be embodied not only as an apparatus or a system but also as a method. Further, a portion of this invention can be configured as software.

### <Description of the Components>

Hereinbelow, the components of the first embodiment will be described.

### (Monitoring unit for transmission error)

The 'monitoring unit for transmission error' is configured to monitor transmission error of the master transmission path. Here, the term 'master transmission path' corresponds to a transmission path, which is currently being operated. The term 'backup transmission path' corresponds to a transmission path, which is not currently being operated, and is used by switching from the master transmission path if an error occurs in the master transmission path. Note that, if the switching from the master transmission path to the backup transmission path is carried out, the switched backup transmission path becomes active, and is used as the new master transmission path. Further, the original master transmission path may be used as a backup transmission path, or may not be used (i.e., a third transmission path is used as a backup transmission path). To the master transmission path and the backup transmission path, packets containing the same information are output from the transmission apparatus. Note that the master transmission path and the backup transmission path are not limited to electrical transmission path, and may be an optical transmission path.

The 'transmission error' means an abnormal signal level of a received packet, a packet-drop, packet-drops of more than a predetermined number, or a time-out of receiving packet. Precedential to the transmission error, the packet will be briefly described. Examples of the 'packet' include audio information, video information, image information, control information, or information including such compressed information. Further, data is generally digital data, and is configured by 'bit' a expressed by '0' and '1'. The packet is configured, for example, by address, data, and control information (including packet number indicating order of packets to be transmitted), and they are transmitted as one set. The address of the packet includes, for example, information indicating destination name and transmission source, and is called as packet, but the transmission source is not always required. Examples of the packet include IP (Internet Protocol) packet, TCP (Transmission Control Protocol) packet, and UDP (User Data Protocol) packet. Further, in the packet, ATM cell and something having similar configuration to that are also included. Further, the packet may include error-correction code. Note that the length of packet is generally less than or equal to 1,500 bytes, and for example, packets having a greater length than this are divided before transmission and reassembled at the receiver's side.

Hereinbelow, the transmission error will be described.

The 'abnormal signal level' of the received packet means that amplitude of signal indicating respective digital data configuring a packet is not within a predetermined range. The abnormal signal level includes the case where data contains errors (i.e., bit inversion), or the case where the data does not contain an error The reason why abnormal signal level is regarded as transmission error is that even if data error does not currently occur, since the abnormal signal level possibly causes error in transmission/reception apparatus for these packets, it is necessary to enable the removing of the error by carrying out switching. It is not necessary to detect the bit error, and it is an aspect of the present invention that the 'abnormal signal level of the received packet' is detected by monitoring the signal level, and determination of transmission error is carried out. This will be described in the after-mentioned first example.

Subsequently, the 'packet-drop' means that packet numbers lose continuity when packets are continuously received. For example, in cases where packet numbers of transmitted packets are 1,2,3,4,5,6, 7, 8,..., if the packet numbers of received packets are 1,2,3,4,6,7,8, ..., this means that the packet having packet number '5' is lost (hereinbelow, a packet having packet number '1' is referred to as packet 1), The reason why the packet-drop occurs is, for example, the case where the packet is lost in transmission path (case 1), and the case where an error occurs on the packet number itself, and causes the packet-drop (case 2). For example, in case 1, an apparatus on the transmission path discards a packet due to occurrence of bit error in the packet, and a subsequent apparatus receives packets. In this case, although the bit error does not occur in the received packets, the packet-drop is caused (in the above example, the packet 5 is dropped).

In case 2, bit error occurs in the received packet. However, in each case 1 and 2, it is not necessary to detect the bit error, and it is an aspect of the present invention that the 'packet-drop' is detected by monitoring the packet number, and determination of transmission error is carried out. This will be described in the after-mentioned second example.

Subsequently, the 'packet-drops of more than a predetermined number' means that there are packet-drops more than a predetermined number. Here, the 'predetermined number' corresponds, for example, to 2, 3, and 4 etc.. For example, in cases where the predetermined number is '2', if the number of the packet-drop is '1', this is not determined to be a transmission error. Similarly, in cases where the predetermined number is '3', if the number of packet-drops is '1' or '2', this is not determined as a transmission error. Further, in cases where the predetermined number is '4', if the number of packet-drops is '1', '2', or '3', this is not determined as transmission error. In this case, the lost packet can be configured to be recoverable by means of error correction code included in the packet. Also in this case, it is not necessary to detect the bit error, and it is an aspect of the present invention that the 'packet-drops more than a predetermined number' is detected by monitoring the packet number, and determination of transmission error is carried out. This will be described in the after-mentioned eighth example of the fifth embodiment.

Subsequently, the 'time-out of the receiving packet' is time-out, in which the packet is not detected for a predetermined period of time. For example, the case where a packet having the subsequent packet number is not received within a predetermined period of time in continuously receiving packets is sited. The reason why the time-out of receiving packet occurs is, for example, that disjoint or disconnection of a cable connected to the transmission path causes an error in the transmission apparatus, thereby disenabling transmission of packets. Also in this case, it is not necessary to detect the bit error, and it is an aspect of the present invention that the 'time-out of the receiving packet' is detected by monitoring the packet number, and determination of transmission error is carried out. This will be described in the after-mentioned third example.

The above-mentioned transmission errors, 'packet-drop', 'packet-drops more than a predetermined number', and 'time-out of the receiving packet', are mainly monitored on the transmission path of CBR (Constant Bit Rate), and on restricted VBR (Variable Bit Rate). Here, the CBR and the restricted VBR are briefly described. At the outset, bit-rate is described. The 'bit-rate' indicates amount of transmission of digital data such as video data and audio data per unit of time. The unit is generally expressed by bps (Bit Per Second). The digital data such as video data and audio data may be compressed or uncompressed. Generally, as the bit-rate increases, the amount of information increases, so that video quality and audio quality become higher. Subsequently, the 'CBR' is constant bit-rate. Examples of the bit-rate of CBR include 270Mbps, 540Mbps, 1.5Gbps, or 10Gbps. The CBR is suitable for the case of transmitting video entirely configured by a constant amount of information such as interviews using a camera in a fixed position. Further, the 'VBR' is variable bit-rate. The VBR is suitable for the case of transmitting video including a dynamic scene such as live broadcast of sports. However, although the VBR has no limitation on its band and its performance and quality are extremely high, it has the disadvantage of being expensive. Therefore, the restricted VBR, which has a restricted band, is used. Examples of the bit-rate of the restricted VBR include 260 to 280Mbps, 530 to 550Mbps, 1.4 to 1.6Gbps, or 9.9 to 10.1 Gbps. Since bit-rates of the CBR and the restricted VBR are within a certain range, they are suitable for monitoring the transmission errors, 'packet-drop', 'packet-drops more than a predetermined number', and 'time-out of receiving packet'.

A result of the monitoring of the transmission error is, for example, outputted to the outputting unit for switching command.

### (Outputting unit for switching command)

The 'outputting unit for switching command' is configured to output a switching command to the switching/receiving unit. Here, the 'switching command' corresponds to a command enabling switching to the backup transmission path before the transmission error reaches the switching/receiving unit in cases where the result of the monitoring indicates the transmission error. Here, as a method for enabling switching to the backup transmission path before the transmission error reaches the switching/acquiring unit, a method, in which buffer is provided on a master or a backup transmission path, and phase of packet signal reaching the master or backup transmission path is adjusted, may be used.

### (Switching/receiving unit)

The 'switching/receiving unit' is provided downstream of the monitoring unit for transmission error, and in normal case, receives the packet from the master transmission path, and in a predetermined case, carries out switching to the backup transmission path and receives the packet from the backup transmission path. Here, the 'predetermined case' corresponds to the case the switching command is receives from the switching/receiving unit. Here, the term 'downstream' is a position, to which one packet passing through the master or backup transmission path reaches afterward. Further, the switching of a packet from the master transmission path to the backup transmission path may be carried out at a packet with transmission error, or may be carried out at a preceding packet of the packet with a transmission error.

### <Processing Flow>

Hereinbelow, the processing flow of the first embodiment will be described. Note that the after-mentioned processing flow can be embodied as a method, a program for causing a computer to execute it, and a readable recording medium storing the program (the same is applied throughout other processing flows of this specification).

Fig. 2 is a flow chart of the first embodiment.

At the outset, in the duplicate transmission path switching apparatus, the monitoring step for transmission error monitors transmission error of the master transmission path (step S0201). Subsequently, in the duplicate transmission path switching apparatus, the output step for switching command outputs a switching command enabling switching to the backup transmission path before the transmission error reaches a unit carrying out switching in cases where the result of the monitoring by the monitoring step for transmission error indicates the transmission error (step S0202). Subsequently, in the duplicate transmission path switching apparatus, the switching/receiving step causes the unit carrying out switching to switch the transmission path for receiving the packet from the master transmission path to the backup transmission path, and receiving the packet, in cases where the switching command is output by the outputting step for switching command (step S0203).

### (First Example)

Hereinbelow, a first example of the first embodiment will be described, In the first example, the case where the transmission error is the 'abnormal signal level of received packet' will be described.

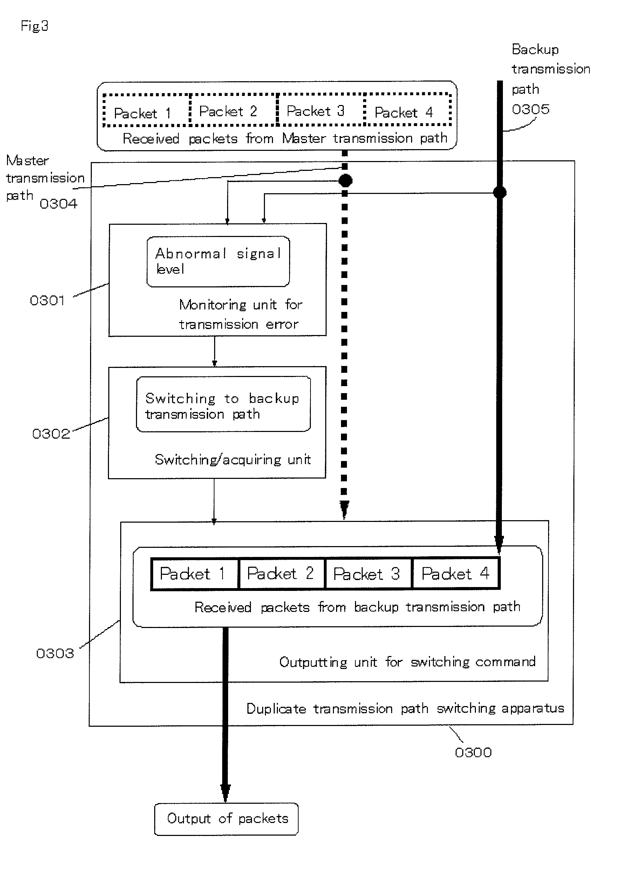

Fig. 3 is a functional block diagram exemplifying the duplicate transmission path switching apparatus the first example. A duplicate transmission path switching apparatus 0300 comprises a monitoring unit for transmission error 0301, an output unit for switching command 0302, a switching/receiving unit 0303, a master transmission path 0304, and a backup transmission path 0305.

At the outset, the monitoring unit for transmission error monitors the received packets 1, 2, 3, and 4 from the master transmission path (packets surrounded by perforated lines in Fig. 3, and the perforated lines indicate abnormal signal level of received packet). Subsequently, since the result of the monitoring by the monitoring unit indicates the transmission error for transmission error (abnormal signal level of received packet), the output unit for switching command outputs a switching command enabling switching to the backup transmission path to the switching/receiving unit before the transmission error reaches the switching/receiving unit. Subsequently, since the switching command has been output by the outputting unit for switching command, the switching/receiving unit carries out switching the transmission path for receiving the packet from the master transmission path to the backup transmission path, and receives the packets 1, 2, 3, and 4 (packets surrounded by solid lines in Fig. 3, and the solid lines indicate that the received packets are normal). The received packets are, for example, output to subsequent apparatus.

### (Second Example)

Hereinbelow, a second example of the first embodiment will be described. In the second example, the case where the transmission error is the 'packet drop' will be described,

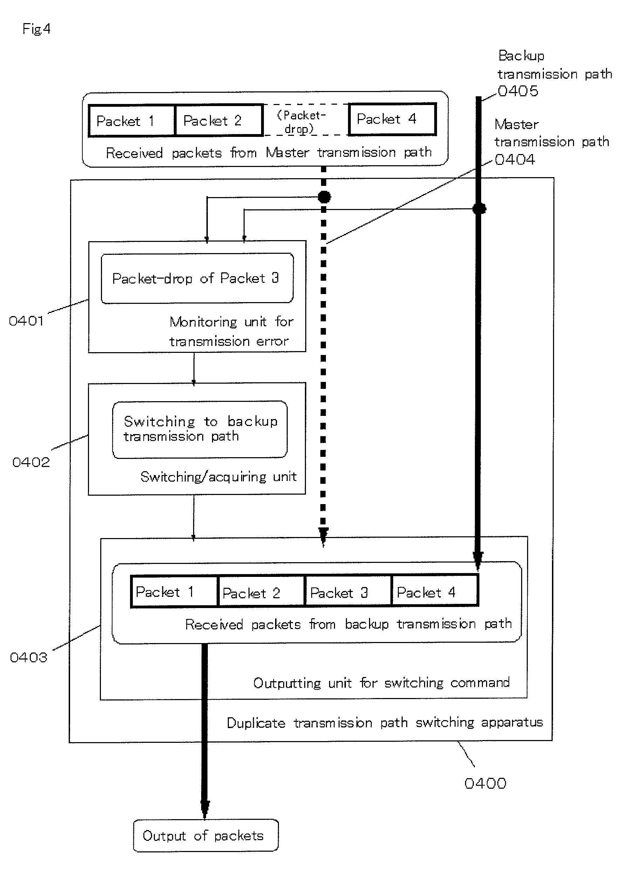

Fig. 4 is a functional block diagram exemplifying the duplicate transmission path switching apparatus of the second example. A duplicate transmission path switching apparatus 0400 comprises a monitoring unit for transmission error 0401, an outputting unit for switching command 0402, a switching/receiving unit 0403, a master transmission path 0404, and a backup transmission path 0405.

At the outset, the monitoring unit for transmission error monitors the received packets 1, 2, and 4 from the master transmission path (packets surrounded by solid lines in Fig. 4, and the solid lines indicate that the received packets are normal). In this case, it is determined by monitoring packet numbers that the transmission error has occurred because the packet 3 has dropped. Subsequently, since the result of the monitoring by the monitoring unit indicates for transmission error the transmission error (packet 3 has dropped), the output unit for switching command outputs a switching command enabling switching to the backup transmission path to the switching/receiving unit before the transmission error reaches the switching/receiving unit. Subsequently, since the switching command has been output by the output unit for switching command, the switching/receiving unit carries out switching the transmission path for acquiring the packet from the master transmission path to the backup transmission path, and receives the packets 1, 2, 3, and 4 (packets surrounded by solid lines in Fig. 4, and the solid lines indicate that the received packets are normal). The received packets are, for example, output to subsequent apparatus. Note that in the above description, although the switching/receiving unit carries out switching to the backup transmission path, and receives packets from the packet 1, it is possible to configure to receives packets from the dropped packet 3.

### (Third Example)

Hereinbelow, a third example of the first embodiment will be described. In the third example, the case where the transmission error is the 'time-out of receiving packet' will be described.

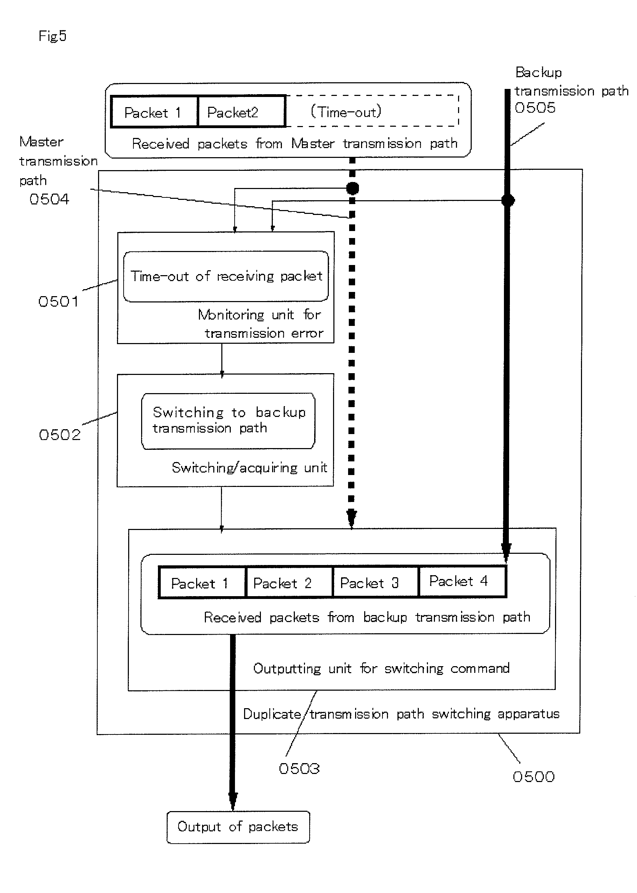

Fig. 5 is a functional block diagram exemplifying the duplicate transmission path switching apparatus of the third example. A duplicate transmission path switching apparatus 0.500 comprises a monitoring unit for transmission error 0501, an outputting unit for switching command 0.502, a switching/receiving unit 0.503, a master transmission path 0504, and a backup transmission path 0505.

At the outset, the monitoring unit for transmission error monitors the received packets 1, and 2 from the master transmission path (packets surrounded by solid lines in Fig. 5, and the solid lines indicate that the received packets are normal). In this case, it is determined by monitoring packet numbers that the transmission error has occurred because the packet 3 has not arrived within a predetermined period of time, for example, 100ms, from receiving the packet 2. Subsequently, since the result of the monitoring by the monitoring unit for transmission error indicates the transmission error (time-out of receiving packet), the output unit for switching command outputs a switching command enabling switching to the backup transmission path to the switching/receiving unit before the transmission error reaches the switching/receiving unit. Subsequently, since the switching command has been outputted by the output unit for switching command, the switching/receiving unit carries out switching the transmission path for receiving the packet from the master transmission path to the backup transmission path, and receives the packets 1, 2, 3, and 4 (packets surrounded by solid lines in Fig. 5, and the solid lines indicate that the received packets are normal). The received packets are, for example, output to subsequent apparatus. Note that in the above description, although the switching/receiving unit carries out switching to the backup transmission path, and receives packets from the packet 1 (a packet, which is normal even in the master transmission path before the switching), it is possible to configure to receive packets from packet 3, at which time-out of receiving packet has occurred.

### <Brief Description of Effects of First Embodiment>

According to the duplicate transmission path switching apparatus of the first embodiment, it becomes possible to carry out non-interruptive switching from the master transmission path to the backup transmission path in the case of a transmission error such as abnormal signal level of a received packet, a packet-drop, packet-drops more than a predetermined number, or time-out of a received packet.

### «Second embodiment»

Hereinbelow, a second embodiment will be described.

### <Concept of Second Embodiment>

Hereinbelow, a concept of the second embodiment will be described. The duplicate transmission path switching apparatus of the second embodiment according to the first embodiment, further comprising a first delay buffering unit, which is provided on the master transmission path between a receiving point for monitoring signal of the monitoring unit for transmission error, which is provided on the master transmission path, and the switching/receiving unit, and a second delay buffering unit, which is provided on the backup transmission path, upstream of the switching/receiving unit.

### <Specifying of Components>

Hereinbelow, components of the second embodiment will be specified.

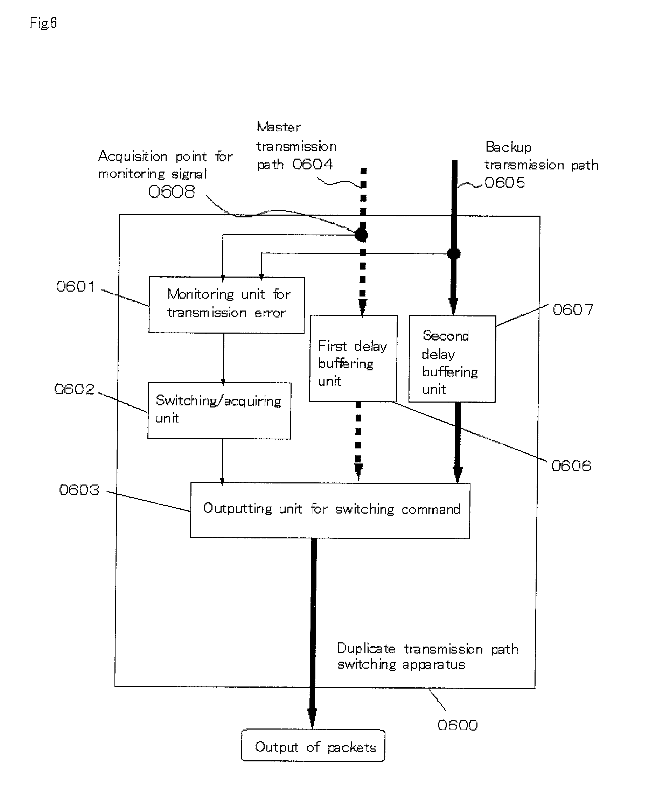

Fig. 6 is a functional block diagram exemplifying the duplicate transmission path switching apparatus the second embodiment. A duplicate transmission path switching apparatus 0600 comprises a monitoring unit for transmission error 0601, an output unit for switching command 0602, a switching/receiving unit 0603, a master transmission path 0604, a backup transmission path 0605, a first delay buffering unit 0606, and a second delay buffering unit 0607. The block point on the master transmission path indicates the receiving point for monitoring signal 0608.

### <Description of the Components>

Hereinbelow, the components of the second embodiment will be described.

### (Monitoring Unit for Transmission Error), (Output Unit for Switching Command), and (Switching/receiving Unit)

The 'monitoring unit for transmission error', the 'output unit for switching command', and the 'switching/receiving unit' are the same as those of the first embodiment, so that descriptions are omitted.

### (First Delay Buffering unit)

The 'first delay buffering unit' is provided on the master transmission path between an receiving point for a monitoring signal and the switching/receiving unit. The first delay buffering unit carries out buffer of the received packets on the master transmission path. The 'receiving point for monitoring signal' is a receiving point for signal configuring the received packet on the master transmission path, and is provided on the master transmission path of the 'monitoring unit for transmission error. Amount of packets stored in the first delay buffering unit may be the same as, less than, or more than the amount of packets stored in the second delay buffering unit. Therefore, it is to be configured so that the switching to the backup transmission path can be carried out before transmission error reaches the switching/receiving unit in cases where the result of the monitoring indicates the transmission error. Note that the amount of packets to be stored in the first delay buffering unit (i.e., amount of delay) may be zero. The stored received packets are, for example, output to the switching/receiving unit..

### (Second Delay Buffering unit)

The 'second delay buffering unit' is provided on the backup transmission path, upstream of the switching/receiving unit. The second delay buffering unit carries out buffering of the received packets on the backup transmission path. Note that the amount of packets to be stored in the second delay buffering unit (i.e., amount of delay) may be zero. The stored received packets are, for example, output to the switching/receiving unit.

Note that it is an issue of designing to set the above amount of buffering in the first delay buffering unit and in the second delay buffering unit. Basically, the amount changes depending on lengths of transmission lines from the monitoring points for transmission error of the first delay buffering unit and the second delay buffering unit to the switching/receiving unit, and on switching speed etc.

### <Processing Flow>

Hereinbelow, the processing flow of the second embodiment will be described.

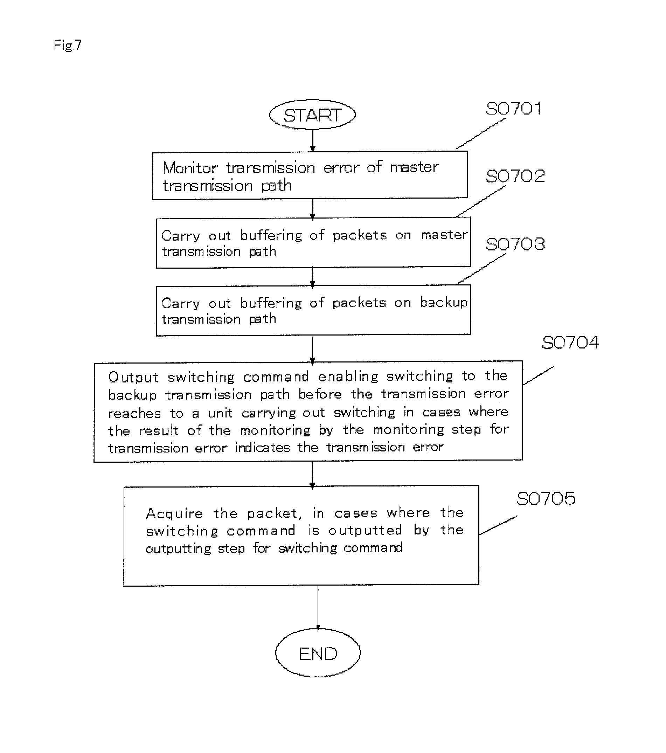

Fig. 7 is a flow chart of the second embodiment.

At the outset, in the duplicate transmission path switching apparatus, the monitoring step for transmission error monitors transmission error of the master transmission path (step S0701). Subsequently, in the duplicate transmission path switching apparatus, a first delaying step delays the transmission of the packet on the master transmission path between a receiving point for monitoring signal of the monitoring unit for transmission error, which is provided on the master transmission path and the switching/receiving unit (step S0702). Subsequently, in the duplicate transmission path switching apparatus, a second delaying step delays the transmission of the packet on the backup transmission path, upstream of the switching/receiving unit (step S0703). Subsequently, in the duplicate transmission path switching apparatus, the output step for switching command outputs a switching command enabling switching to the backup transmission path before the transmission error reaches a unit carrying out switching in cases where the result of the monitoring by the monitoring step for transmission error indicates the transmission error (step S0704). Subsequently, in the duplicate transmission path switching apparatus, the switching/receiving step causes the unit carrying out switching to switch the transmission path for receiving the packet from the master transmission path to the backup transmission path, and receives the packet, in cases where the switching command is output by the output step for switching command (step S0705).

Note that step S0702 and S0703 may be carried out in a reverse order or simultaneously.

### (Fourth Example)

Hereinbelow, a fourth example of the second embodiment will be described. In the fourth example, the case where the transmission error is the 'packet drop' will be described.

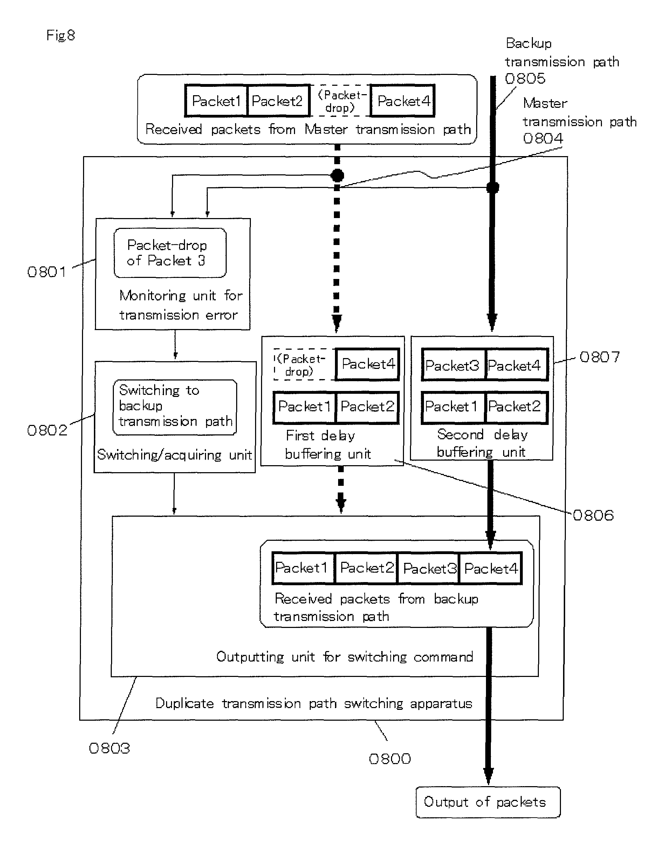

Fig. 8 is a functional block diagram exemplifying the duplicate transmission path switching apparatus the second embodiment. A duplicate transmission path switching apparatus 0800 comprises a monitoring unit for transmission error 0801, an output unit for switching command 0802, a switching/receiving unit 0803, a master transmission path 0804, a backup transmission path 0805, a first delay buffering unit 0806, and a second delay buffering unit 0807. The block point on the master transmission path indicates the receiving point for monitoring signal 0808.

At the outset, the monitoring unit for transmission error monitors the received packets 1, 2, and 4 from the master transmission path (packets surrounded by solid lines in Fig. 8, and the solid lines indicate that the received packets are normal). In this case, it is determined by monitoring packet numbers that the transmission error has occurred because the packet 3 has dropped. Subsequently, the first delay buffering unit delays the transmission of the packets (at least the received packets 1, 2, and 4, and the dropped packet 3) on the master transmission path between a receiving point for monitoring signal of the monitoring unit for transmission error, which is provided on the master transmission path and the switching/receiving unit. Subsequently, the second delay buffering unit delays the transmission of the packets (at least the received packets 1, 2, 3, and 4) on the backup transmission path, upstream of the switching/acquiring unit. Subsequently, since the result of the monitoring by the monitoring unit for transmission error indicates the transmission error (the packet 3 has dropped), the output unit for switching command outputs a switching command enabling switching to the backup transmission path to the switching/receiving unit before the transmission error reaches the switching/receiving unit. Subsequently, since the switching command has been output by the output unit for switching command, the switching/receiving unit carries out switching the transmission path for receiving the packet from the master transmission path to the backup transmission path, and receiving the packets 1, 2, 3, and 4 (packets surrounded by solid lines in Fig. 8, and the solid lines indicate that the received packets are normal). The received packets are, for example, output to subsequent apparatus. Note that in the above description, although the switching/receiving unit carries out switching to the backup transmission path, and receives packets from the packet 1 (a packet, which is normal even in the master transmission path before the switching), it is possible to configure to receive packets from the dropped packet 3.

### <Brief Description of Effects of Second Embodiment>

According to the duplicate transmission path switching apparatus of the second embodiment, the first and second delay buffering units are comprised, so that it becomes possible to carry out buffering of the packet with transmission error on the master transmission path and the normal packet having the same configuration on the backup transmission path at the same time. Therefore, it becomes possible to carry out non-interruptive switching from the master transmission path to the backup transmission path.

### «Third embodiment»

Hereinbelow, a third embodiment will be described.

### <Concept of Third Embodiment>

Hereinbelow, a concept of the third embodiment will be described. The duplicate transmission path switching apparatus of the third embodiment according to the first or second embodiments, wherein the monitoring unit for transmission error comprises_a monitoring means for backup transmission path, which monitors transmission error of backup transmission path, and an output means for error information of backup transmission path, which outputs error information of backup transmission path in cases where a result of the monitoring by the monitoring means for backup transmission path indicates the transmission error.

### <Specifying of Components>

Hereinbelow, components of the third embodiment will be specified.

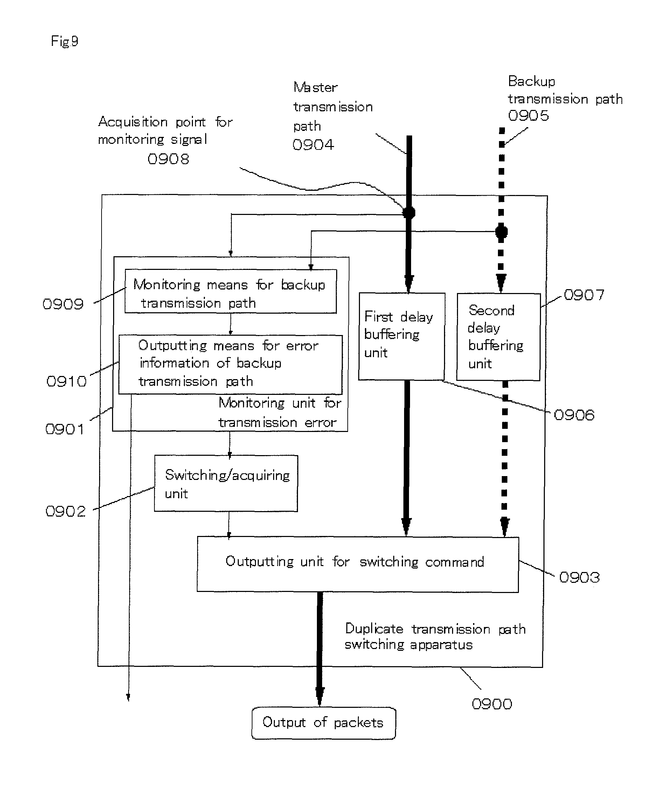

Fig. 9 is a functional block diagram exemplifying the duplicate transmission path switching apparatus the third embodiment. A duplicate transmission path switching apparatus 0900 comprises a monitoring unit for transmission error 0901, an output unit for switching command 0902, a switching/receiving unit 0903, a master transmission path 0904, a backup transmission path 0905, a first delay buffering unit 0906, and a second delay buffering unit 0907. Further, the monitoring unit for transmission error comprises a monitoring means for backup transmission path 0909, and an output means for error information of backup transmission path 0910. The block point on the master transmission path indicates the receiving point for monitoring signal 0908.

### <Description of the Components>

Hereinbelow, the components of the third embodiment will be described.

### (Outputting Unit for Switching Command), (Switching/receiving Unit), (First Delay Buffering unit), and (Second Delay Buffering unit)

The 'outputting unit for switching command', the 'switching/receiving unit', the 'first delay buffering unit', and the 'second delay buffering unit' are the same as those of the first or second embodiment, so that descriptions are omitted.

### (Monitoring unit for transmission error)

The monitoring unit for transmission error comprises the monitoring means for backup transmission path, and the output means for error information of backup transmission path. Here, the 'monitoring means for backup transmission path' is a means for monitoring transmission error on the backup transmission path. The 'output means for error information of backup transmission path' is a means for output error information of the backup transmission path. The 'error information of backup transmission path' is information to the effect that a result of the monitoring by the monitoring means for backup transmission path indicates the transmission error. The transmission error is the same as the transmission error on the master transmission path described in the first embodiment, so that description thereof is omitted. The other aspects are same as those of the first or second embodiment, so that descriptions are omitted.

### <Processing Flow>

Hereinbelow, processing flow of the third embodiment will be described.

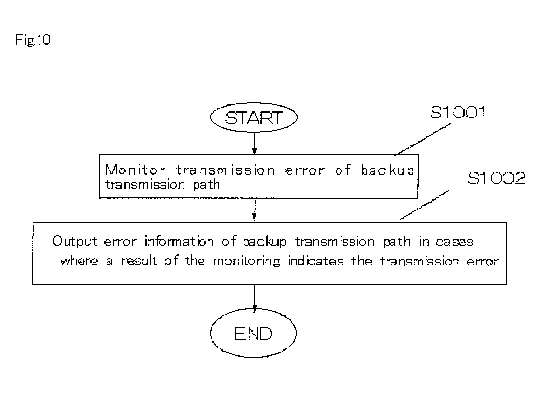

Fig. 10 is a flow chart of the third embodiment.

At the outset, in the duplicate transmission path switching apparatus, the monitoring means for backup transmission path monitors transmission error of backup transmission path (step S1001). Subsequently, the output means for error information of backup transmission path outputs error information of backup transmission path in cases where a result of the monitoring by the monitoring means for backup transmission path indicates the transmission error (step S1002). The other steps are the same as those of the first or second embodiment, so that the descriptions are omitted.

### (Fifth Example)

Hereinbelow, a fifth example of the third embodiment will be described. In the fifth example, the case where the transmission error on the backup transmission path is the 'abnormal signal level of the received packet' will be described.

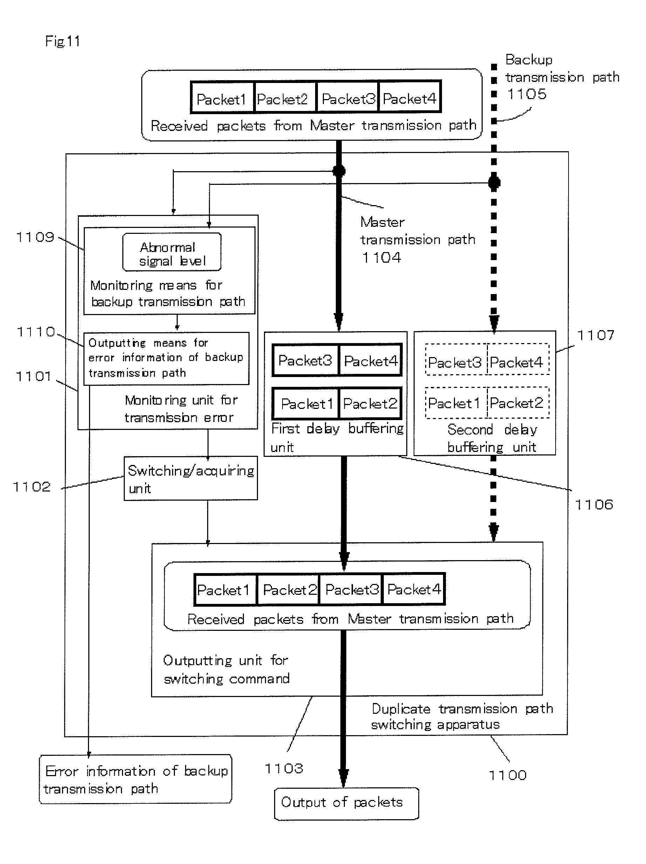

Fig. 11 is a concrete functional block diagram exemplifying the duplicate transmission path switching apparatus the fifth example. A duplicate transmission path switching apparatus 1100 comprises a monitoring unit for transmission error 1101, an output unit for switching command 1102, a switching/receiving unit 1103, a master transmission path 1104, a backup transmission path 1105, a first delay buffering unit 1106, and a second delay buffering unit 1107. Further, the monitoring unit for transmission error comprises a monitoring means for backup transmission path 1109, and an output means for error information of backup transmission path 1110. The block point on the master transmission path indicates the receiving point for monitoring signal 1108.

At the outset, the monitoring unit for transmission error monitors the received packets 1, 2, 3, and 4 from the master transmission path (packets surrounded by solid lines in Fig. 11, and the solid lines indicate that the received packets are normal). Subsequently, the monitoring means for backup transmission path monitors the received packets 1, 2, 3, and 4 on the backup transmission path (packets surrounded by perforated lines in Fig. 11, and the perforated lines indicate that signal level of the received packets are abnormal), and determines that the transmission error has occurred. In this case, a result of the monitoring by the monitoring means for backup transmission path indicates the transmission error, so that the output means for error information of backup transmission path outputs error information of backup transmission path. Subsequently, the first delay buffering unit delays the transmission of the packet (at least the received packets 1, 2, 3 and 4) on the master transmission path between a receiving point for monitoring signal of the monitoring unit for transmission error, which is provided on the master transmission path, and the switching/receiving unit. Subsequently, the second delay buffering unit delays the transmission of the packet (at least the received packets 1, 2, 3, and 4) on the backup transmission path, upstream of the switching/receiving unit. Subsequently, since the result of the monitoring by the monitoring unit for transmission error indicates no transmission error, the output unit for switching command does not output a switching command to the switching/receiving unit. Subsequently, since the switching command has not been output by the output unit for switching command, the switching/receiving unit keeps the master transmission path as the transmission path for receiving the packet, and receives the packets 1, 2, 3, and 4 (packets surrounded by solid lines in Fig. 11, and the solid lines indicate that the received packets are normal). The received packets are, for example, output to subsequent apparatus.

### <Brief Description of Effects of Third Embodiment>

According to the duplicate transmission path switching apparatus of the third embodiment, the monitoring unit for transmission error comprises the monitoring means for backup transmission path and the outputting means for error information of backup transmission path, so that it becomes possible to notify the transmission error on the backup transmission path. Further, in cases where the transmission error occurs on the backup transmission path, it is possible to determine to not carry out switching to the backup transmission path.

### «Fourth embodiment»

Hereinbelow, a fourth embodiment will be described.

### <Concept of Fourth Embodiment>

Hereinbelow, a concept of the fourth embodiment will be described. The duplicate transmission path switching apparatus of the fourth embodiment according to the second or third embodiment, further comprising a comparing unit for delay, which is provided upstream of the first delay buffering unit and the second delay buffering unit, and compares delay of master transmission path with delay of backup transmission path.

### <Specifying of Components>

Hereinbelow, components of the fourth embodiment will be specified.

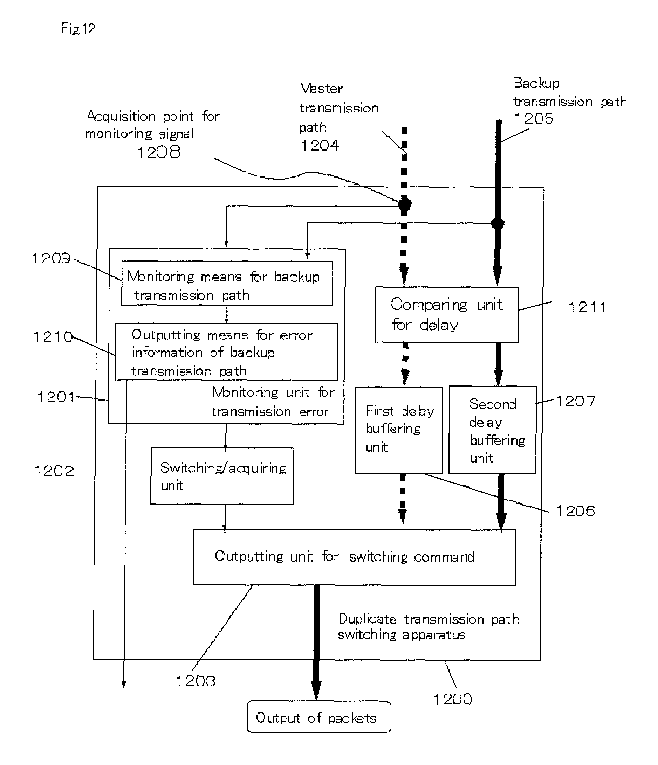

Fig. 12 is a functional block diagram exemplifying the duplicate transmission path switching apparatus the fourth embodiment. A duplicate transmission path switching apparatus 1200 comprises a monitoring unit for transmission error 1201, an output unit for switching command 1202, a switching/receiving unit 1203, a master transmission path 1204, a backup transmission path 1205, a first delay buffering unit 1206, a second delay buffering unit 1207, and a comparing unit for delay 1211. Further, the monitoring unit for transmission error comprises a monitoring means for backup transmission path 1209, and an output means for error information of backup transmission path 1210. The block point on the master transmission path indicates the receiving point for monitoring signal 1208.

### <Description of the Components>

Hereinbelow, the components of the fourth embodiment will be described.

### (Monitoring Unit for Transmission Error), (Output Unit for Switching Command), (Switching/receiving Unit), (First Delay Buffering unit), and (Second Delay Buffering unit)

The 'monitoring unit for transmission error', the 'output unit for switching command', the 'switching/receiving unit', the 'first delay buffering unit', and the 'second delay buffering unit' are the same as those of the second or third embodiment, so that descriptions are omitted,

### (Comparing unit for delay)

The 'comparing unit for delay' is provided upstream of the first delay buffering unit and the second delay buffering unit, and compares delay of master transmission path with delay of backup transmission path. Here, the term 'upstream' means a position, to which one packet passing through the master or backup transmission path reaches previously. For example, the case where delay of the master transmission path is larger than that of the backup transmission path is described. In this case, a packet on the backup transmission path reaches earlier than a packet on the master transmission path. Here, by buffering packets at least corresponding to the difference of delay between the master transmission path and the backup transmission path in the second delay buffering unit, it is possible to adjust the phase of the packet on the master transmission path and the phase of the packet on the backup transmission path. Here, the terms 'adjust the phases' means adjustment of output timing of a signal of the packet on the backup transmission path, having the same information as the packet on the master transmission path, to the switching/receiving unit. Therefore, in cases where transmission error occurs on a packet on the master transmission path, a normal packet having the same information as the packet with transmission error (i.e., packet having the same packet number) has been stored in the second delay buffering unit, so that the normal packet is outputted to the switching/receiving unit, thereby ensuring continuity of packets. Accordingly, it becomes possible to carry out non-interruptive switching. Similarly, the case where delay of the backup transmission path is larger than that of the master transmission path is described. In this case, a packet on the master transmission path reaches earlier than a packet on the backup transmission path. Here, by buffering packets at least corresponding to the difference of delay between the master transmission path and the backup transmission path in the first delay buffering unit, it is possible to adjust the phase of the packet on the backup transmission path and the phase of the packet on the master transmission path. Therefore, in cases where a transmission error occurs on a packet on the master transmission path, the packet with transmission error is not outputted to the switching/receiving unit, and it is possible to output a normal packet stored in the second delay buffering unit to the switching/receiving unit. The reason for this is that it is possible to store the packet with transmission error in the first delay buffering unit until arrival of a normal packet from the backup transmission path. The normal packet on the backup transmission path is outputted to the switching/receiving unit, thereby ensuring continuity of the packets. Accordingly, it becomes possible to carry out non-interruptive switching.

The comparison result by the comparing unit for delay is, for example, output to the first and second delay buffering units.

Although the comparing unit for delay is provided upstream of the first delay buffering unit and the second delay buffering unit in the above description, the present invention is not limited to the above configuration. For example, the comparing unit for delay may be provided downstream of the first delay buffering unit and the second delay buffering unit. In this case, the comparing unit for delay compares the delay of packet outputted by the first delay buffering unit with delay of the packet output by the second delay buffering unit, and carries out feedback of the result, so that it becomes possible to adjust phases of the output packets from the first and second delay buffering units.

### <Processing Flow>

Hereinbelow, processing flow of the fourth embodiment will be described.

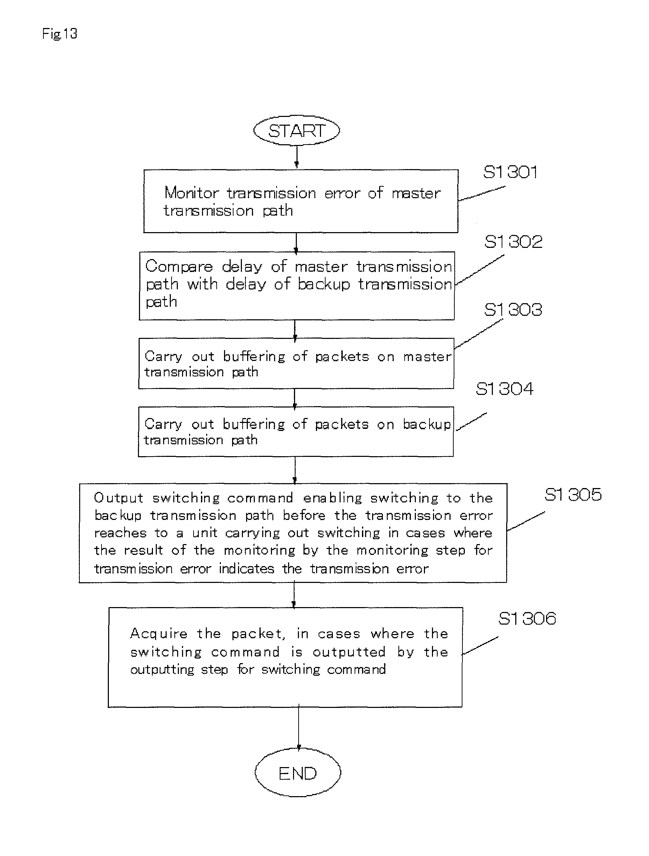

Fig. 13 is a flow chart of the fourth embodiment.

At the outset, in the duplicate transmission path switching apparatus, the monitoring step for transmission error monitors transmission error of the master transmission path (step S 1301). Subsequently, in the duplicate transmission path switching apparatus, the comparing step for delay compares the delay of the master transmission path with delay of the backup transmission path precedential to the execution of the first delaying step and the second delaying step for any packet (step S1302) Subsequently, in the duplicate transmission path switching apparatus, a first delaying step delays the transmission of the packet on the master transmission path between an acquisition point for monitoring signal of the monitoring unit for transmission error, which is provided on the master transmission path, and the switching/receiving unit (step S1303). Subsequently, in the duplicate transmission path switching apparatus, a second delaying step delays the transmission of the packet on the backup transmission path, upstream of the switching/receiving unit (step S1304). Subsequently, in the duplicate transmission path switching apparatus, the output step for switching command outputs a switching command enabling switching to the backup transmission path before the transmission error reaches a unit carrying out the switching in cases where the result of the monitoring by the monitoring step for transmission error indicates the transmission error (step S1305). Subsequently, in the duplicate transmission path switching apparatus, the switching/receiving step causes the unit carrying out switching to switch the transmission path for receiving the packet from the master transmission path to the backup transmission path, and receives the packet, in cases where the switching command is output by the outputting step for the switching command (step S 1306).

Note that the step S1303 and S1304 may be carried out in a reverse order or at the same time. The monitoring step for backup transmission path and the outputting step for error information of backup transmission path are the same as those of the third embodiment, so that descriptions are omitted.

### (Sixth Example)

Hereinbelow, a sixth example of the fourth embodiment will be described. In the sixth example, the transmission error is the 'packet drop'.

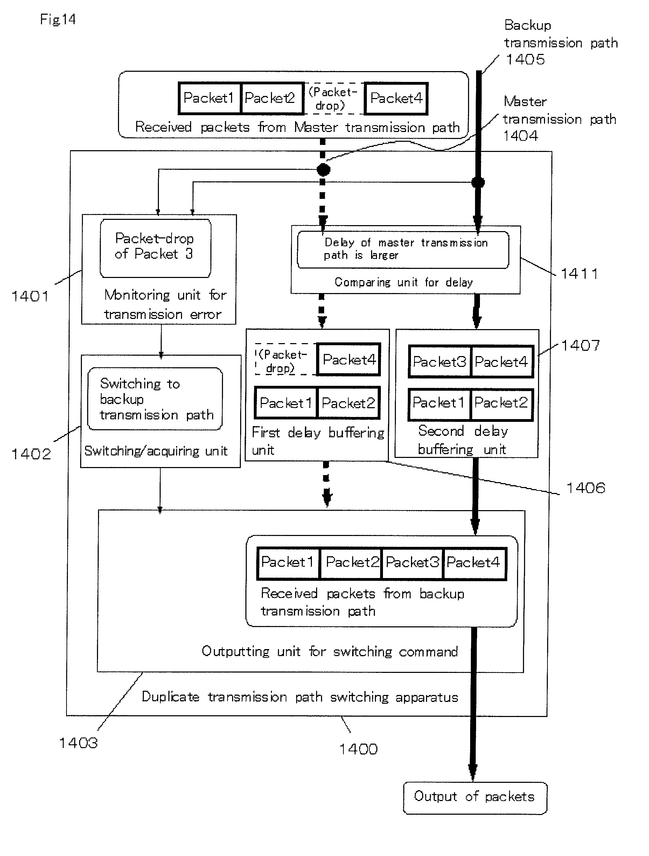

Fig. 14 is a functional block diagram exemplifying the duplicate transmission path switching apparatus of a sixth example. A duplicate transmission path switching apparatus 1400 comprises a monitoring unit for transmission error 1401, an outputting unit for switching command 1402, a switching/receiving unit 1403, a master transmission path 1404, a backup transmission path 1405, a first delay buffering unit 1406, a second delay buffering unit 1407, and a comparing unit for delay 1411. Further, the monitoring unit for transmission error comprises a monitoring means for backup transmission path 1409, and an output means for error information of backup transmission path 1410. The block point on the master transmission path indicates the receiving point for monitoring signal 1408.

At the outset, the monitoring unit for transmission error monitors the received packets 1, 2, and 4 from the master transmission path (packets surrounded by solid lines in Fig. 14, and the solid lines indicate that the received packets are normal). In this case, it is determined by monitoring packet numbers that the transmission error has occurred because the packet 3 has dropped. Subsequently, the comparing unit for delay compares delay of the master transmission path with delay of the backup transmission path, and receives a result that the delay of the master transmission path is larger. Subsequently, the first delay buffering unit delays the transmission of the packets (at least the received packets 1, 2, and 4, and the dropped packet 3) on the master transmission path between a receiving point for monitoring signal of the monitoring unit for transmission error, which is provided on the master transmission path, and the switching/receiving unit based on the result of comparison by the comparing unit for delay. Subsequently, the second delay buffering unit delays the transmission of the packets (at least the received packets 1, 2, 3, and 4) on the backup transmission path, upstream of the switching/receiving unit. Subsequently, since the result of the monitoring by the monitoring unit for transmission error indicates the transmission error (the packet 3 has dropped), the output unit for switching command outputs a switching command enabling switching to the backup transmission path to the switching/receiving unit before the transmission error reaches the switching/receiving unit. Subsequently, since the switching command has been output by the output unit for switching command, the switching/receiving unit carries out switching the transmission path for receiving the packet from the master transmission path to the backup transmission path, and receives the packets 1, 2, 3, and 4 (packets surrounded by solid lines in Fig. 14, and the solid lines indicate that the received packets are normal). The received packets are, for example, output to a subsequent apparatus. Note that in the above description, although the switching/receiving unit carries out switching to the backup transmission path, and receives packets from the packet 1 (a packet, which is normal even in the master transmission path before the switching), it is possible to configure to receive packets from the dropped packet 3.

### <Brief Description of Effects of Fourth Embodiment>

According to the duplicate transmission path switching apparatus of the fourth embodiment, it becomes possible to compare the delay of the master transmission path with delay of the backup transmission path.

### <<Fifth embodiment>>

Hereinbelow, a fifth embodiment will be described.

### <Concept of Third Embodiment>

Hereinbelow, a concept of the fifth embodiment will be described. The duplicate transmission path switching apparatus of the fifth embodiment according to any one of the second to fourth embodiments, wherein the first delay buffering unit and the second delay buffering unit comprise an adjusting means for phase, which is for adjusting phase of a signal on the master transmission path and phase of a signal on the backup transmission path.

### <Specifying of Components>

Hereinbelow, components of the fifth embodiment will be specified.

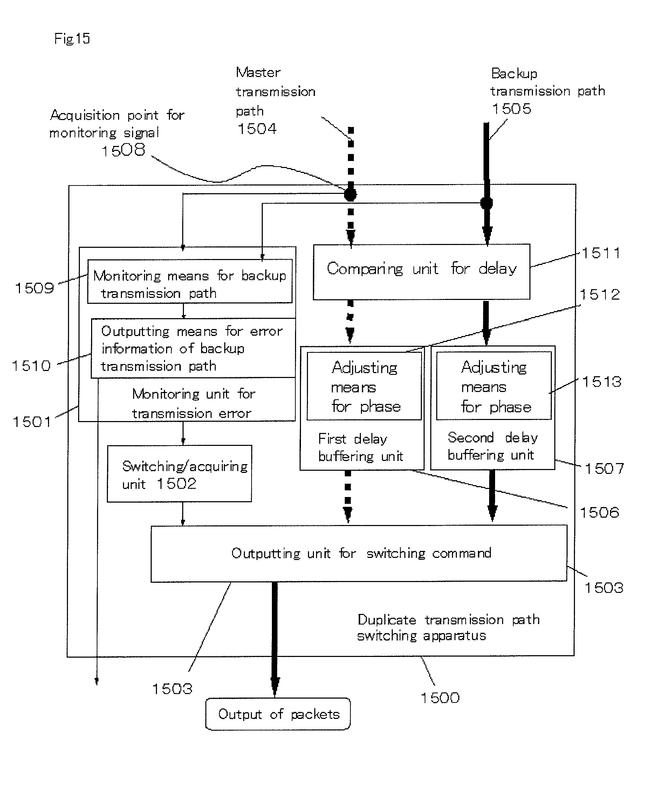

Fig. 15 is a functional block diagram exemplifying the duplicate transmission path switching apparatus the fifth embodiment. A duplicate transmission path switching apparatus 1500 comprises a monitoring unit for transmission error 1501, an outputting unit for switching command 1502, a switching/receiving unit 1503, a master transmission path 1504, a backup transmission path 1505, a first delay buffering unit 1506, a second delay buffering unit 1507, and a comparing unit for delay 1511. Further, the monitoring unit for transmission error comprises a monitoring means for backup transmission path 1509, and an output means for error information of backup transmission path 1510. The first delay buffering unit comprises an adjusting means for phase 1512. The second delay buffering unit comprises an adjusting means for phase 1513. The block point on the master transmission path indicates the receiving point for monitoring signal 1508.

### <Description of the Components>

Hereinbelow, the components of the fifth embodiment will be described.

### (Monitoring Unit for Transmission Error), (Output Unit for Switching Command), (Switching/receiving Unit), (First Delay Buffering unit), (Second Delay Buffering unit), and (Comparing unit for delay)

The 'monitoring unit for transmission error', the 'output unit for switching command', the 'switching/acquiring unit', the 'first delay buffering unit', the 'second delay buffering unit', and the 'comparing unit for delay' are the same as those of the second to fourth embodiments, so that descriptions are omitted.

### (Adjusting means for phase)

Each of the first delay buffering unit and the second delay buffering unit comprises the adjusting means for phase. The 'adjusting means for phase' adjusts the phase of a signal on the master transmission path and phase of a signal on the backup transmission path based on the comparison result by the comparing unit for delay. Examples of the adjustment by the adjusting means for phase include adjustment of speed of input to the first and second delay buffering units, and adjustment of speed of output from the first and second delay buffering units. For example, the case where delay of the master transmission path is larger than that of the backup transmission path is described. In this case, the adjusting means for phase carries out adjustment so that buffer capacity B for packets in the second delay buffering unit is larger than buffer capacity A for packets in the first delay buffering unit. Therefore, by adjusting the first and second delay buffering units so that B = A + α is established if amount of delayed packets on the master transmission path is α, it becomes possible to adjust the phases of the packets outputted to the switching/acquiring unit.

### <Processing Flow>

Hereinbelow, processing flow of the fifth embodiment will be described.

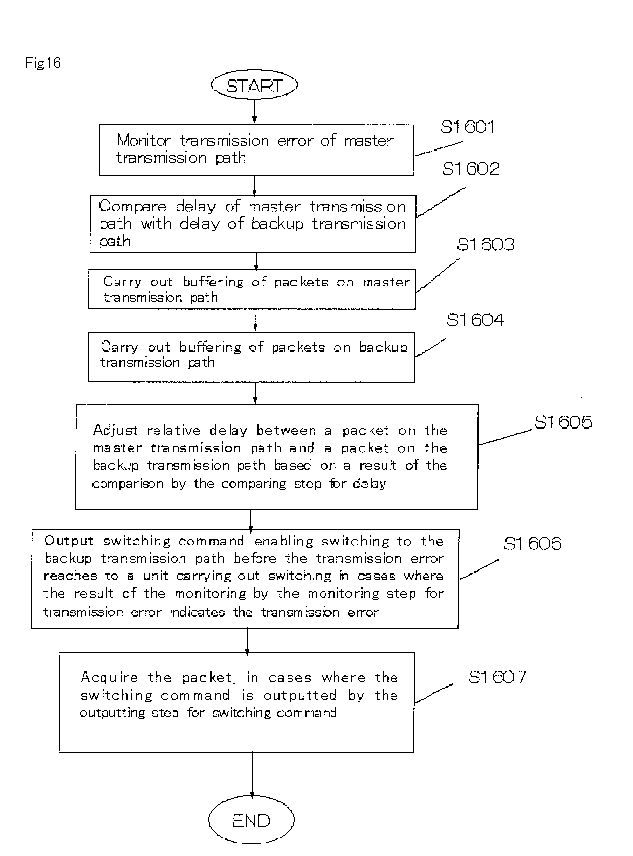

Fig. 16 is a flow chart of the fifth embodiment.

At the outset, in the duplicate transmission path switching apparatus, the monitoring step for transmission error monitors transmission error of the master transmission path (step S 1601). Subsequently, in the duplicate transmission path switching apparatus, the comparing step for delay compares delay of the master transmission path with delay of the backup transmission path precedential to the execution of the first delaying step and the second delaying step for any packet (step S1602). Subsequently, in the duplicate transmission path switching apparatus, a first delaying step delays the transmission of the packet on the master transmission path between a receiving point for monitoring signal of the monitoring unit for transmission error, which is provided on the master transmission path, and the switching/receiving unit (step S1603). Subsequently, in the duplicate transmission path switching apparatus, a second delaying step delays the transmission of the packet on the backup transmission path, upstream of the switching/receiving unit (step S1604). Subsequently, in the duplicate transmission path switching apparatus, the adjusting step adjusts relative delay between a packet on the master transmission path and a packet on the backup transmission path based on a result of the comparison by the comparing step for delay (step S 1605). Subsequently, in the duplicate transmission path switching apparatus, the output step for switching command outputs a switching command enabling switching to the backup transmission path before the transmission error reaches a unit carrying out switching in cases where the result of the monitoring by the monitoring step for transmission error indicates the transmission error (step S1606). Subsequently, in the duplicate transmission path switching apparatus, the switching/receiving step causes the unit carrying out switching to switch the transmission path for receiving the packet from the master transmission path to the backup transmission path, and receives the packet, in cases where the switching command is output by the output step for switching command (step S 1607).

Note that the step S1603 and S1604 may be carried out in a reverse order or simultaneously. The monitoring step for backup transmission path and the outputting step for error information of backup transmission path are the same as those of the third embodiment, so that descriptions are omitted.

### (Seventh Example)

Hereinbelow, a seventh example of the fifth embodiment will be described. In the seventh example, the transmission error is the packet drop'.

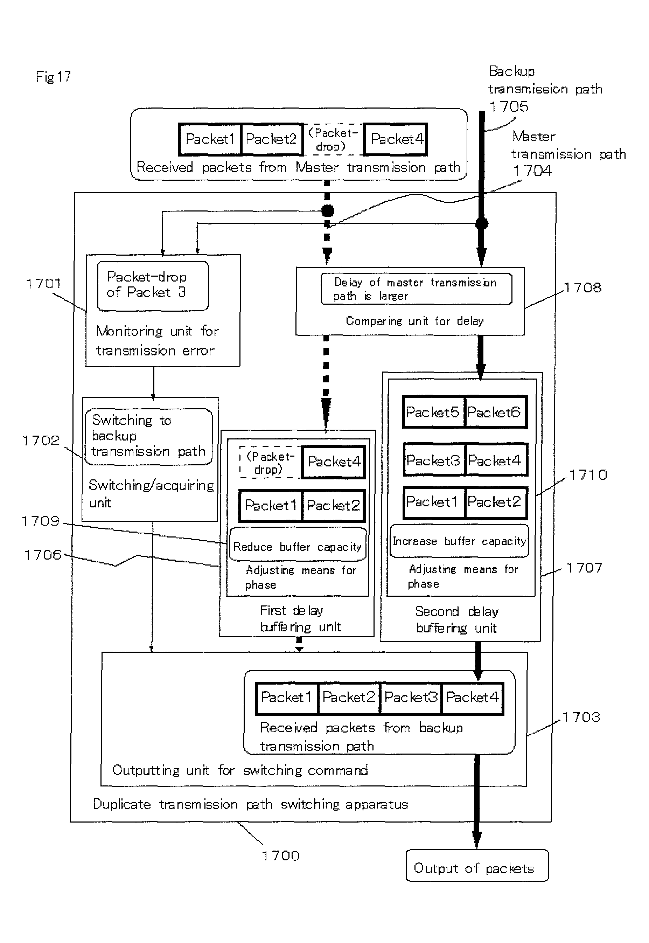

Fig. 17 is a functional block diagram exemplifying the duplicate transmission path switching apparatus of a seventh example. A duplicate transmission path switching apparatus 1700 comprises a monitoring unit for transmission error 1701, an output unit for switching command 1702, a switching/receiving unit 1703, a master transmission path 1704, a backup transmission path 1705, a first delay buffering unit 1706, a second delay buffering unit 1707, and a comparing unit for delay 1708. Further, the first delay buffering unit comprises an adjusting means for phase 1709. The second delay buffering unit comprises an adjusting means for phase 1710.

At the outset, the monitoring unit for transmission error monitors the received packets 1, 2, and 4 from the master transmission path (packets surrounded by solid lines in Fig. 17, and the solid lines indicate that the received packets are normal). In this case, it is determined by monitoring packet numbers that the transmission error has occurred because the packet 3 has dropped. Subsequently, the comparing unit for delay compares delay of the master transmission path with delay of the backup transmission path, and receives a result that the delay of the master transmission path is larger (delay corresponding to 2 packets). Subsequently, the first delay buffering unit delays the transmission of the packets (delay corresponding to 4 packets) on the master transmission path between a receiving point for monitoring signal of the monitoring unit for transmission error, which is provided on the master transmission path, and the switching/receiving unit based on the result of comparison by the comparing unit for delay. Subsequently, the second delay buffering unit delays the transmission of the packets (The delay corresponding to 6 packets) on the backup transmission path, upstream of the switching/acquiring unit. Subsequently, since the result of the monitoring by the monitoring unit for transmission error indicates the transmission error (packet 3 has dropped), the output unit for switching command outputs a switching command enabling switching to the backup transmission path to the switching/receiving unit before the transmission error reaches the switching/receiving unit. Subsequently, since the switching command has been outputted by the outputting unit for switching command, the switching/receiving unit carries out switching the transmission path for receiving the packet from the master transmission path to the backup transmission path, and receives the packets 1, 2, 3, and 4 (packets surrounded by solid lines in Fig. 17, and the solid lines indicate that the received packets are normal). The received packets are, for example, output to subsequent apparatus. Note that in the above description, although the switching/receiving unit carries out switching to the backup transmission path, and receives packets from packet 1 (a packet, which is normal even in the master transmission path before the switching), it is possible to configure to receive packets from the dropped packet 3.

### (Eighth Example)

Hereinbelow, an eighth example of the fifth embodiment will be described. In the eighth example, a example of the case where the predetermined number of the 'packet-drops more than a predetermined number' of the first embodiment is the '2' is described. In this case, since the number of packet-drops is not more than the predetermined number, it is determined that transmission error has not occurred, so that error correcting unit carries out error correction. Hereinbelow, the description will be made with reference to the drawing.

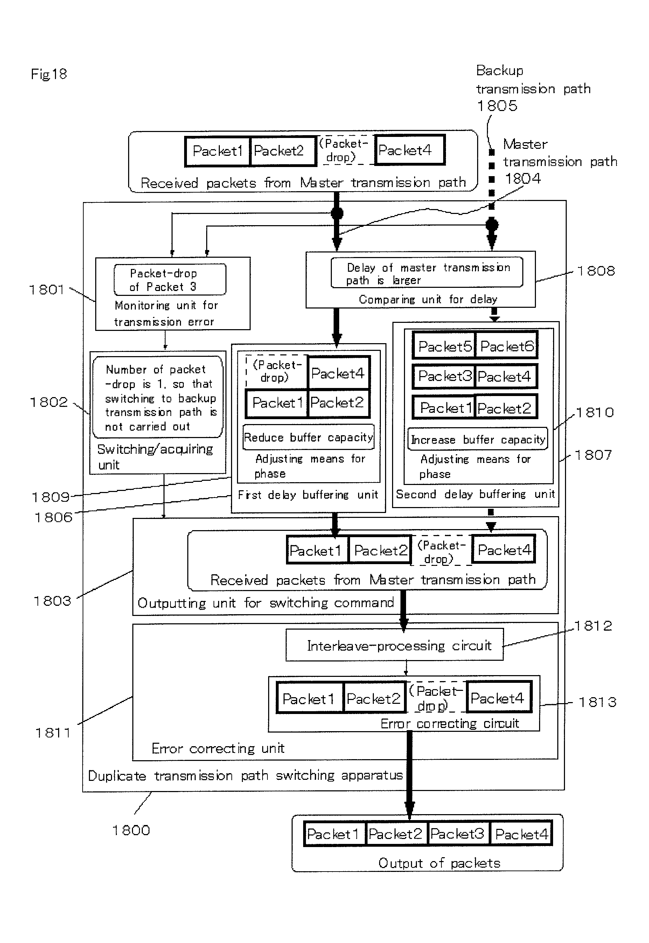

Fig. 18 is a functional block diagram exemplifying the duplicate transmission path switching apparatus of an eighth example. A duplicate transmission path switching apparatus 1800 comprises a monitoring unit for transmission error 1801, an output unit for switching command 1802, a switching/receiving unit 1803, a master transmission path 1804, a backup transmission path 1805, a first delay buffering unit 1806, a second delay buffering unit 1807, a comparing unit for delay 1808, and an error correcting unit 1811. Further, the first delay buffering unit comprises an adjusting means for phase 1809. The second delay buffering unit comprises an adjusting means for phase 1810. The error correcting unit comprises an interleave-processing circuit 1812, and an error correcting circuit 1813.

At the outset, the monitoring unit for transmission error monitors the received packets 1, 2, and 4 from the master transmission path (packets surrounded by solid lines in Fig.. 18, and the solid lines indicate that the received packets are normal). In this case, it is determined by monitoring packet numbers that the transmission error has not occurred because packet 3 has been dropped but number of packet-drop is 1. Subsequently, the comparing unit for delay compares delay of the master transmission path with delay of the backup transmission path, and receives a result that the delay of the master transmission path is larger (delay corresponding to 2 packets). Subsequently, the first delay buffering unit delays the transmission of the packets (delay corresponding to 4 packets) on the master transmission path between a receiving point for monitoring signal of the monitoring unit for transmission error, which is provided on the master transmission path, and the switching/receiving unit based on the result of comparison by the comparing unit for delay. Subsequently, the second delay buffering unit delays the transmission of the packets (delay corresponding to 6 packets) on the backup transmission path, upstream of the switching/receiving unit. Subsequently, since the result of the monitoring by the monitoring unit for transmission error indicates no transmission error (only packet 3 has dropped), the output unit for switching command outputs not a switching command enabling switching to the backup transmission path but a packet from the master transmission path to the switching/receiving unit. Subsequently, since the switching command has been output by the output unit for switching command, the switching/receiving unit carries out switching the transmission path for receiving the packet from the master transmission path to the backup transmission path, and receives the packets 1, 2, and 4 (packets surrounded by solid lines in Fig. 18, and the solid lines indicate that the received packets are normal, and the packet 3 surrounded by perforated lines has been dropped). The received packets are input to the interleave-processing circuit of the error correcting unit. The interleave-processed packets are input to the error correcting circuit, so that the packet 3 is restored. The packet corrected by the error correcting unit is, for example, output to subsequent apparatus.

### (Interleave)

Hereinbelow, a concept of the interleaving used in the eighth embodiment will be described. Here, the 'interleaving' is a method, in which the order of data is changed in the transmitting apparatus, and the data is transmitted, and the data is rearranged in the original order in the receiving apparatus. The initial rearrangement in the transmitting apparatus is called as interleaving, and rearrangement in the original order in the receiving apparatus is called as de-interleaving.

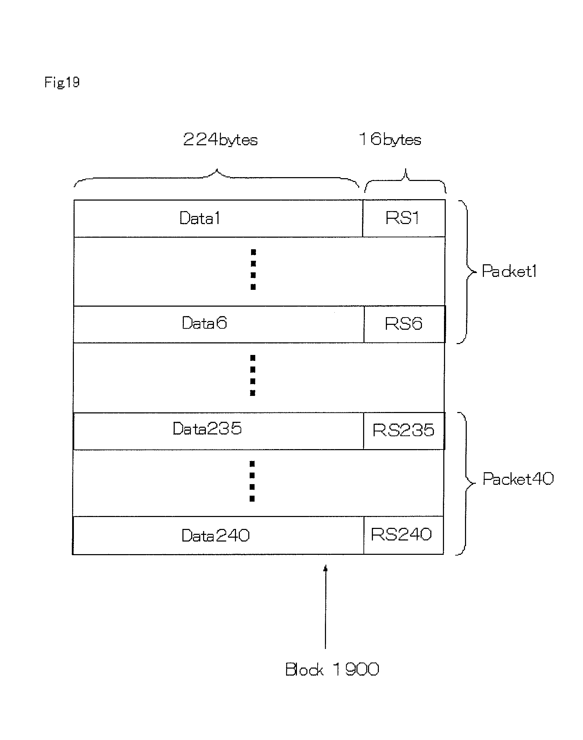

Figs. 19 to 22 are diagrams showing a concept of the interleaving, and in the diagrams, Reed-Solomon code (in Figs, indicated by RS), one of error correcting codes, is used to carry out error correcting. Further, error correcting capability of the Reed-Solomon code is 2. Note that 1 byte = 8 bits in the description hereinbelow.

Fig. 19 is a diagram showing a data block 1900 generated in the transmitting apparatus. The block is segmented into packets 1 to 40. Further, the respective packets are segmented into 6 sets by 240 bytes (these sets of 240 bytes data are called as small packets). The small packet (small packets 1 to 240) is further segmented into data (data 1 to 240) and error correcting code (RSs 1 to 240). The data is 224 bytes, and the error correcting code is 16 bytes. In the data, for example, video data and audio data are stored. In Fig. 19, 240 lines of small packets exist (each small packet is 240 bytes).

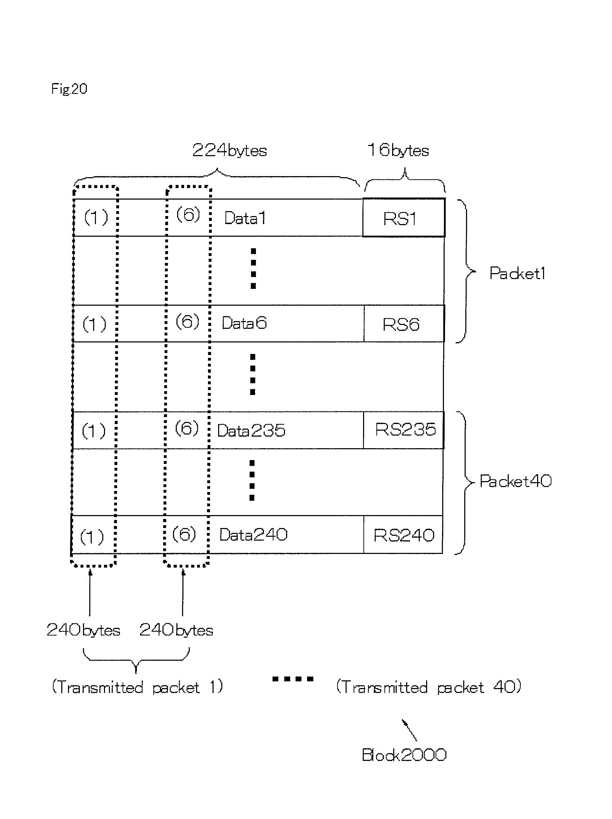

Fig. 20 is a diagram exemplifying rearrangement of data in the transmitting apparatus.

The order of bytes in the respective small packets 1 to 240 is indicated by numbers as the first byte is (1), the sixth byte is (6) etc. When transmitting packets, data having the same number are transmitted as one packet. For example, in Fig. 20, 240 data having the number (1) are transmitted as one packet (packets surrounded by perforated lines in Fig. 20). Similarly, 240 data having the number (2), ..., and 240 data having the number (240) are transmitted as one packet.

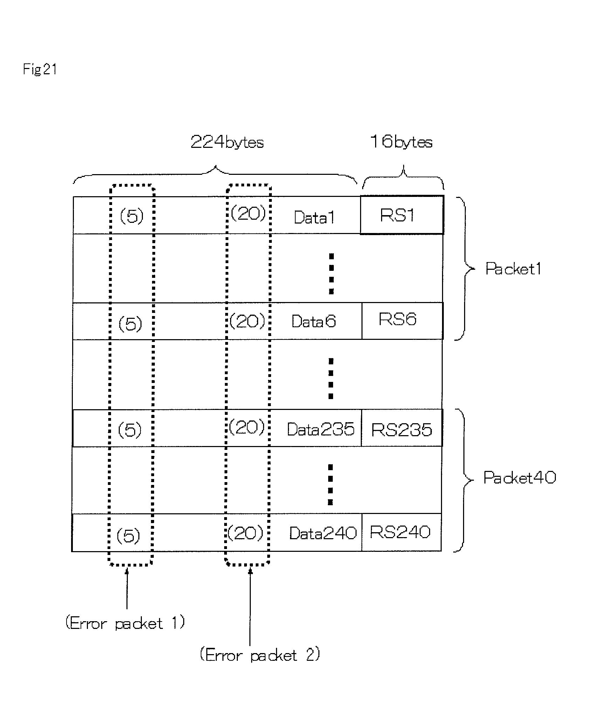

Fig. 21 shows the case where errors have occurred in the packets received in the receiving apparatus. In Fig. 21, errors have occurred in two packets (error packet 1 and error packet 2, surrounded by perforated lines). In this case, although the errors have occurred in the fifth byte, and the twentieth byte of the respective small packets, since the errors are within the scope of the error correcting capability, it is possible to correct errors by rearranging data in the receiving apparatus.

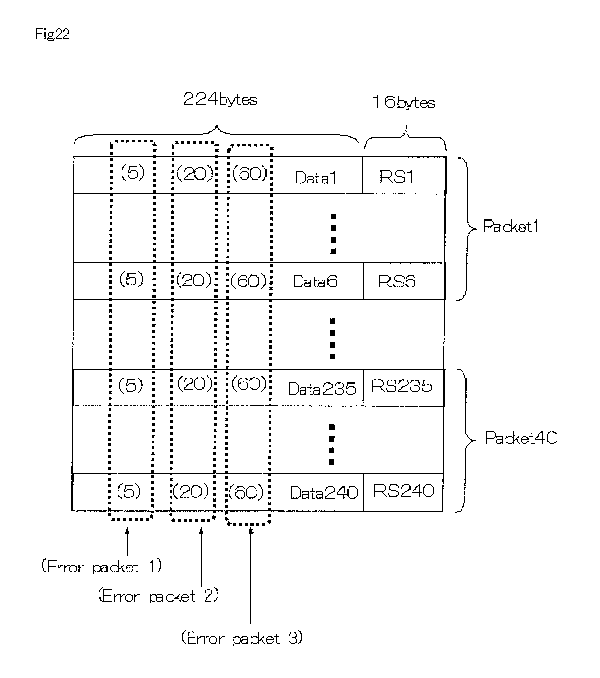

Fig.. 22 shows the case where errors have occurred in the packets received in the receiving apparatus. In Fig. 22, errors have occurred in three packets (error packet 1 and error packet 2, and error packet 3, surrounded by perforated lines). In this case, errors have occurred in the fifth byte, the twentieth byte, and the sixtieth byte of the respective small packets, since the errors are not within the scope of the error correcting capability, it is impossible to correct errors. In this case, for example, retransmission of error packet 3 is requested.

### (Block Diagram of Entire System Configuration)

Hereinbelow, the entire system configuration using the duplicate transmission path switching apparatus of the eighth example will be described.

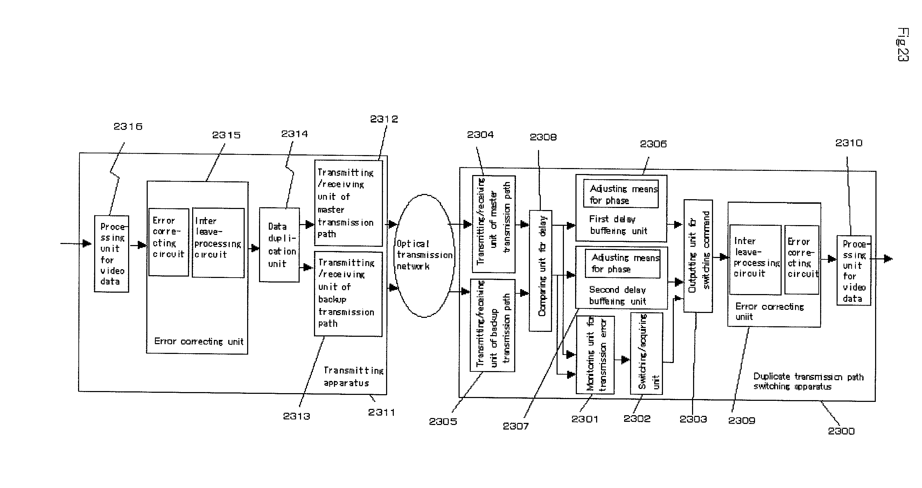

Fig. 23 is a diagram showing an entire system configuration using the transmitting apparatus 2311 and the duplicate transmission path switching apparatus 2300. The transmitting apparatus comprises a processing unit for video data 2316, an error correcting unit 2315, a data duplication unit 2314, a transmitting/receiving unit of master transmission path 2312, and a transmitting/receiving unit of backup transmission path 2313. The error correcting unit comprises an error correcting circuit, and an interleave-processing circuit. A duplicate transmission path switching apparatus 2300 comprises a monitoring unit for transmission error 2301, an output unit for switching command 2302, a switching/receiving unit 2303, a first delay buffering unit 2306, a second delay buffering unit 2307, a comparing unit for delay 2308, an error correcting unit 2309, and a transmitting/receiving unit of master transmission path 2304, and a transmitting/receiving unit of backup transmission path 2305. The first delay buffering unit and the second delay buffering unit comprise adjusting means for phase. The error correcting unit comprises an interleave-processing circuit, and an error correcting circuit. Note that the duplicate transmission path switching apparatus is the same as that of Fig. 18, so that the description is omitted.

At the outset, a video signal is input to the processing unit for video data of the transmitting apparatus from another apparatus. The processing unit for video data carries out processing of the input video data, and converts it into packet data. The converted packet data is output to the error correcting unit. In the error correcting unit, coding of the error correction code (in the error correcting circuit) and interleave-processing (in the interleave-processing circuit) are carried out. The packet coded and interleave-processed is output to the data duplication unit. The data duplication unit outputs the duplicated data to the transmitting/receiving unit of master transmission path and transmitting/receiving unit of backup transmission path. The transmitting/receiving unit of master transmission path and transmitting/receiving unit of backup transmission path output the received packet to the optical transmission network. The transmitting/receiving unit of master transmission path and transmitting/receiving unit of backup transmission path of the duplicate transmission path switching apparatus receive the duplicated data from the optical transmission network.

### <Brief Description of Effects of Fifth Embodiment>

According to the duplicate transmission path switching apparatus of the fifth embodiment, the adjusting means for phase is included, so that it becomes possible to adjust phases of the signal on the master transmission path and of the signal on the backup transmission path.

The present invention is applicable to a duplicate transmission path switching apparatus, which can carry out non-interruption switching in duplicate transmission, and an operation method thereof.

## Claims

1. A duplicate transmission path switching apparatus, which transmits a packet including the same information to a master transmission path and a backup transmission path, comprising:
a monitoring unit for transmission error, which monitors transmission error of said master transmission path;
a switching/receiving unit, which is provided downstream of the monitoring unit for transmission error, and in normal case, acquires the packet from the master transmission path, and in a predetermined case, carries out switching to the backup transmission path and acquires the packet from the backup transmission path; and
an output unit for switching command, which outputs a switching command enabling switching to the backup transmission path before the transmission error reaches the switching/receiving unit in cases where the result of the monitoring indicates the transmission error.

2. The duplicate transmission path switching apparatus according to Claim 1, wherein said transmission error is packet-drop.

3. The duplicate transmission path switching apparatus according to Claim 1, wherein said transmission error is packet-drops of more than a predetermined number.

4. The duplicate transmission path switching apparatus according to any one of Claims 1 to 3, wherein
said transmission error is time out, non-detection of the packet for a predetermined period of time.

5. The duplicate transmission path switching apparatus according to any one of Claims 1 to 4, further comprising:
a first delay buffering unit, which is provided on the master transmission path between receiving point for monitoring signal of the monitoring unit for transmission error, which is provided on the master transmission path, and the switching/receiving unit; and
a second delay buffering unit, which is provided on the backup transmission path, upstream of the switching/acquiring unit.

6. The duplicate transmission path switching apparatus according to any one of Claims 1 to 5, wherein:
said monitoring unit for transmission error comprises
a monitoring means for backup transmission path, which monitors transmission error of backup transmission path, and
an outputting means for error information of backup transmission path, which outputs error information of backup transmission path in cases where a result of the monitoring by the monitoring means for backup transmission path indicates the transmission error.

7. The duplicate transmission path switching apparatus according to Claim 5 or 6, further comprising:
a comparing unit for delay, which is provided upstream of the first delay buffering unit and the second delay buffering unit, and compares delay of the master transmission path with delay of the backup transmission path

8. The duplicate transmission path switching apparatus according to any one of Claims 5 to 7, wherein:
said first delay buffering unit and said second delay buffering unit comprise
an adjusting means for phase, which is for adjusting phase of a signal on the master transmission path and phase of a signal on the backup transmission path based on the result of the comparison by the comparing unit for delay.

9. The duplicate transmission path switching apparatus according to any one of Claims 1 to 8, wherein:
said master transmission path and the standby transmission path are optical transmission paths.

10. An operation method for duplicate transmission path switching apparatus, which transmits a packet including the same information to a master transmission path and a backup transmission path, comprising:
a monitoring step for transmission error, which monitors a transmission error of said master transmission path;
an outputting step for switching command, which outputs a switching command enabling switching to the backup transmission path before the transmission error reaches a unit carrying out switching in cases where the result of the monitoring by the monitoring step for transmission error indicates the transmission error;
a switching/receiving step, which causes the unit carrying out switching to switch the transmission path for receiving the packet from the master transmission path to the backup transmission path, and receives the packet, in cases where the switching command is output by the outputting step for switching command.

11. The operation method for duplicate transmission path switching apparatus according to Claim 10, wherein
said transmission error is a packet-drop.

12. The operation method for duplicate transmission path switching apparatus according to Claim 10, wherein
said transmission error is packet-drops of more than a predetermined number.

13. The operation method for duplicate transmission path switching apparatus according to any one of Claims 10 to 12, wherein
said transmission error is time-out, non-detection of the packet for a predetermined period of time.

14. The operation method for duplicate transmission path switching apparatus according to any one of Claims 10 to 13, further comprising:
a first delaying step, which delays the transmission of the packet on the master transmission path between a receiving point for monitoring signal of the monitoring unit for transmission error, which is provided on the master transmission path, and the switching/receiving unit; and
a second delaying step, which delays the transmission of the packet on the backup transmission path, upstream of the switching/acquiring unit.

15. The operation method for duplicate transmission path switching apparatus according to any one of Claims 10 to 14, wherein:
said monitoring step for transmission error comprises
a monitoring step for backup transmission path, which monitors transmission error of backup transmission path, and
an outputting step for error information of backup transmission path, which outputs error information of backup transmission path in cases where a result of the monitoring by the monitoring step for backup transmission path indicates the transmission error.

16. The operation method for duplicate transmission path switching apparatus according to Claim 14 or 15, further comprising:
a comparing step for delay, which compares delay of the master transmission path with delay of the backup transmission path precedential to the execution of the first delaying step and the second delaying step for any packet.

17. The operation method for duplicate transmission path switching apparatus according to any one of Claims 14 to 16, wherein:
said first delaying step and said second delaying step comprise
an adjusting step, which is for adjusting relative delay between a packet on the master transmission path and a packet on the backup transmission path based on a result of the comparison by the comparing step for delay.

18. The operation method for duplicate transmission path switching apparatus according to any one of Claims 10 to 17, wherein:
said master transmission path and standby transmission path are optical transmission paths.
